# EUROPÄISCHE PATENTSCHRIFT

(11) **EP 1 762 716 B1**
(45) Veröffentlichungstag und Bekanntmachung des Hinweises auf die Patenterteilung: **21.11.2012**
(21) Anmeldenummer: 05019497.6
(22) Anmeldetag: 07.09.2005
(51) Int. Cl.: F02D 9/06

(54) **Bremsklappe mit Bypass**
Exhaust brake with bypass channel
Frein d'échappement avec une conduite de bypass

(43) Veröffentlichungstag der Anmeldung: 14.03.2007
(73) Patentinhaber: BorgWarner, Inc., Auburn Hills, MI 48326-2872 (US)
(72) Erfinder: Müller, Karsten, 66882 Hütschenhausen (DE); Klingel, Dieter, 67281 Kirchheim (DE)
(74) Vertreter: Wolf, Eckhard

(56) Entgegenhaltungen:
- US-A- 4 138 849
- US-A- 6 101 812

## Beschreibung

Die Erfindung betrifft eine Anordnung zur Steuerung des Abgasstroms eines vorzugsweise nach dem Dieselprinzip arbeitenden Motors, mit mindestens einem von dem Abgasstrom beaufschlagten Turbolader mit einem Turbinenrad und einem Verdichterrad, die auf einer gemeinsamen Welle angeordnet sind, mit einem Abgaskrümmer, der den Abgasstrom von Auslassventilen des Motors zum Turbolader leitet, und mit einer zwischen den Auslassventilen und dem Turbolader angeordneten Einrichtung zur wahlweisen Drosselung des Abgasstroms, und mit mindestens einer zwischen den Auslassventilen und dem Turbolader angeordneten Bypassleitung, die zumindest einen Teil des Abgasstroms an der Drosseleinrichtung vorbeiführt und diesen auf das Turbinenrad des Turboladers leitet.

Insbesondere bei Lastkraftwagen ist es üblich zusätzlich zur Betriebsbremse eine Motorbremse vorzusehen. Diese umfasst eine im Auspuffrohr angeordnete Bremsklappe, die bei turbogeladenen Motoren stromabwärts vom Turbolader angeordnet ist. Wenn ein Lastkraftwagen längere Zeit auf abschüssiger Strecke unterwegs ist und ein dauerndes Abremsen erforderlich ist, würde die Betriebsbremse überhitzen oder übermäßig verschleissen. Die zusätzliche Motorbremse ist dann von hohem Nutzen. Zu ihrer Aktivierung wird die Bremsklappe im Auspuffrohr geschlossen und gleichzeitig die Treibstoffzufuhr zum Motor unterbrochen, so dass keine weitere Verbrennung stattfindet.

Wenn die Bremsklappe geschlossen ist, bildet sich ein Staudruck zwischen der Klappe und den Kolben des Motors, da der Motor weiter dreht und Verbrennungsluft fördert. Die Kolben werden durch den Staudruck gebremst, da der Druck, der sich in den Zylindern aufbaut, bei geöffneten Auslassventilen nicht mehr durch den Auspuff entweichen kann. Über die Kurbelwelle und den weiteren Antriebsstrang wird ein Bremsmoment auf die Antriebsräder übertragen. Wenn die Kolben jedoch gegen den Druck, der sich bei geschlossener Bremsklappe in den Zylindern aufbaut, ihren Aufwärtshub ausführen, wird die sich in den Zylindern befindliche Luft stark komprimieren. Soweit diese im Zylinder verbleibt, wird der aufgestaute Druck nach Erreichen des oberen Totpunkts eine entsprechende abwärts gerichtete Kraft auf die Kolben ausüben und somit einen Teil der eigentlich erzielten Bremsleistung wieder zunichte machen.

Um dies zu vermeiden, sind verschiedene Lösungen vorgeschlagen worden. So ist es bekannt, ein zusätzliches Auslassventil im Zylinder vorzusehen, das genau am oder in der Nähe des oberen Totpunkts öffnet und den aufgestauten Druck kontrolliert ablässt. Der Kolben bewegt sich dann ohne zusätzliche Unterstützung des Staudrucks abwärts.

Eine weitere Möglichkeit der Steigerung der Bremsleistung besteht darin, dem Motor über den Einlasstrakt beim Ansaugtakt zusätzliche Luft zuzuführen, die bei geschlossenen Auslassventilen beim Verdichtungshub als zusätzliche Luftmasse eine weiter gesteigerte Bremsleistung erzeugt.

Bei einem mittels eines Turboladers aufgeladenen Motor könnte diese zusätzliche Luft dadurch bereitgestellt werden, dass der Lader bei geschlossener Bremsklappe weiterhin einen Ladedruck erzeugt, der dem Motor ansaugseitig zugeführt wird. Bei der bekannten Anordnung der Bremsklappe stromabwärts vom Turbolader kann der Lader jedoch prinzipbedingt nicht weiter angetrieben werden, da das Turbinenrad nicht mehr dem Abgasstrom ausgesetzt ist. Die Anordnung der Bremsklappe zwischen den Auslassventilen und dem Turbolader allein würde hieran nichts ändern.

Aus dem US-Patent 4138849 ist ein Bremsventil mit einer zentralen Durchbrechung bekannt, die im geschlossenen Zustand einen Teil des Abgasstroms in Richtung Turbolader durchlässt. Die Durchbrechung ist jedoch vergleichsweise weit entfernt von dem Turbinenrad, so dass dieses nicht gezielt beaufschlagt wird. Der Wirkungsgrad dieses Ventils in Bezug auf den Antrieb des Turboladers bei geschlossenem Ventil ist daher gering. Es soll auch kein erheblicher Ladedruck erzeugt werden, sondern lediglich ein Leerlauf der Laderwelle aufrechterhalten werden, um Ölleckagen an Lagerstellen der Welle zu vermeiden.

Eine gattungsgemäße Vorrichtung ist aus dem US-Patent 6101812 bekannt. Hier sind eine Bremsklappe herkömmlicher Bauart und eine Bypassleitung vorgesehen, die stromaufwärts von der Bremsklappe an den Abgaskrümmer angeschlossen ist und derart in das Turbinengehäuse des Turboladers mündet, dass das Turbinenrad einen Ladedruck erzeugend angetrieben wird. Die separate Bypassleitung erfordert jedoch entsprechenden Platz im Motorraum und kann durch ihre exportierte Lage leicht beschädigt werden. Dazu ist ein Anschluss am Abgaskrümmer erforderlich.

Ausgehend hiervon besteht die Aufgabe der vorliegenden Erfindung darin, eine Anordnung zur Steuerung des Abgasstroms eines mittels eines Turboladers aufgeladenen Motors bereit zu stellen, die bei kompakter, modularer Bauweise eine Nutzung des Turboladers für eine leistungsfähige Motorbremse ermöglicht.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung sieht vor, dass die Einrichtung zur Drosselung des Abgasstroms und die mindestens eine Bypassleitung in einem gemeinsamen Gehäuse angeordnet sind und dass in dem Gehäuse zwei separate Strömungspfade mit jeweils einer Bremsklappe und einer Bypassleitung ausgebildet sind. Moderne Motoren weisen in der Regel eine Stossaufladung auf, wobei mehrere Zylinder des Motors aufgrund der Zündfolge so zusammengefasst werden, dass sich die Druckpulsationen dieser zusammengefassten Zylinder möglichst nicht negativ beeinflussen. Dies hat zur Folge, dass man bei heutigen modernen Motoren zweiflutige Turbinen mit getrennten Strömungspfaden verwendet. Daher wird für jeden Kanal der zweiflutigen Turbine eine separate Bremsklappe mit Bypassleitung vorgesehen. Die zwei Bremsklappen können separat oder gekoppelt synchron betätigt werden, indem sie über ein Betätigungsgestänge miteinander verbunden sind. Gegenüber der Verwendung einer einzelnen Bremsklappe mit einer Bypassleitung ergibt sich ein so ein verbesserter Wirkungsgrad und die Steuerung kann variabel erfolgen. Die Betätigung der Bremsklappen kann pneumatisch, hydraulisch oder elektrisch und mittels einer elektronischen Steuereinheit erfolgen. Das Gehäuse ist zweckmäßig als Gussteil aus Metall ausgebildet.

Soweit hier der Begriff Abgasstrom verwendet wird, soll dies sowohl Verbrennungsabgase als auch diejenige Luft umfassen, die vom Motor im Bremsbetrieb gefördert wird, in dem die Kraftstoffzufuhr unterbrochen ist und bei dem somit keine Verbrennung stattfindet, also jeglicher vom Motor ausgestoßener Gasstrom. Bei der erfindungsgemäßen Anordnung ist die Bremsklappe zwischen dem Turbolader und dem Motor angeordnet und die Bypassleitung ist zweckmäßig als kalibrierter Kanal ausgebildet, dessen Querschnitt derart bemessen ist, dass ein vorbestimmt begrenzter Abgasstrom mit hoher Geschwindigkeit und somit hohem Impuls auf das Turbinenrad geleitet wird. Hierdurch wird erreicht, dass der Turbolader trotz relativ geringer Antriebsluftmenge auf eine hohe Drehzahl gebracht wird und damit verdichterseitig die gewünschte Luftmenge zur Verfügung stellt, und zwar bei geschlossener oder fast geschlossener Bremsklappe und auch bei relativ geringer Motordrehzahl, bei der der Motor naturgemäß einen geringen Gasdurchsatz erzeugt. Der Drehzahleinsatzbereich, bei dem der kalibrierte Kanal wirksam wird, hängt von seinem Querschnitt ab und lässt sich dadurch auf einen bestimmten Motor auslegen. Insbesondere lässt sich erreichen, dass die Motorbremse bei wesentlich geringeren Drehzahlen als bisher möglich einsetzt.

Eine Randbedingung bei der Auslegung der Bypassleitung besteht darin, dass der Staudruck zwischen einem geschlossenen Auslassventil und der Bremsklappe nicht über einen gewissen Wert ansteigen darf. Ein zu hoher Druck kann das Auslassventil entgegen dem Schließdruck der Ventilfeder wieder aufdrücken, so dass Kolben und Ventil aufeinander treffen. Die Bypassleitung sollte daher einen vom jeweiligen Motortyp abhängigen Mindestquerschnitt aufweisen. Bei höheren Motordrehzahlen kann hingegen die Bremsklappe wieder geringfügig geöffnet werden, da dann ein hinreichender Abgasstrom für den normalen Antrieb des Turboladers zur Verfügung steht.

Ein weiterer Vorteil der erfindungsgemäßen Anordnung kann in der Beschleunigungsphase des Motors erzielt werden. Bei niedrigen Drehzahlen weist ein turbogeladener Motor oftmals ein sogenanntes Turboloch auf, d.h. es tritt beim Beschleunigen eine Verzögerung bis zum Erreichen des vollen Ladedrucks auf. Um dem zu begegenen, weisen moderne Turbolader eine variable Turbinengeometrie (VTG) auf, die ein besseres Ansprechen des Laders bewirkt. Ein Turbolader mit VTG ist jedoch aufwändig herzustellen und somit teuer als ein herkömmlicher Turbolader ohne VTG. Bei der erfindungsgemäßen Anordnung kann eine elektronische Steuerung eingesetzt werden, die beispielsweise über die Gaspedal- oder Drosselklappenstellung einen Beschleunigungsvorgang bei niedrigen Motordrehzahlen registriert. Die Bremsklappe kann dann kurzzeitig zumindest teilweise geschlossen werden, so dass ein anteilsmäßig größerer Abgasstrom durch den kalibrierten Kanal geleitet wird und mit hoher kinetischer Energie auf das Turbinenrad trifft. Dieses wird hierdurch beschleunigt und es wird sehr schnell ein Ladedruckstieg erreicht. Sobald der erhöhte Ladedruck erreicht ist, muss die Bremsklappe jedoch wieder geöffnet werden, da der Turbolader ansonsten überdreht werden könnte.

Die mindestens eine Bypassleitung ist bevorzugt in einer Öffnungsstellung der Bremsklappe, in der der gesamte Abgasstrom dem Turbolader zugeführt wird, verschlossen und in einer Schließstellung der Bremsklappe freigegeben. Bei teilweise geschlossener Bremsklappe gelangt ein nur geringer Teil des Abgasstroms in die Bypassleitung.

Das Gehäuse der Drosseleinrichtung kann einstückig mit einem Gehäuse des Turboladers ausgebildet sein. Alternativ kann das Gehäuse der Drosseleinrichtung einstückig mit dem Abgaskrümmer ausgebildet sein. In beiden Fällen weist das Gehäuse des Turboladers einen an die mindestens eine Bypassleitung in dem Gehäuse der Drosseleinrichtung anschließenden Kanal auf, der den Abgasstrom auf das Turbinenrad leitet.

Im Folgenden wird die Erfindung anhand eines in der Zeichnung schematisch dargestellten Ausführungsbeispiels näher erläutert. Es zeigen
- Fig. 1: ein Funktionsschema der erfindungsgemäßen Anordnung;
- Fig. 2a: und b eine perspektivische Ansicht des Gehäuses der Bremsklappen bei zweiflutiger Ausbildung und eines Turbinenradgehäuses eines Turboladers;
- Fig. 3a: und b Längsschnitte durch verschiedene Ebenen des Bremsklappengehäuses; und
- Fig. 4a: und b einen Querschnitt durch das Turbinenradgehäuse gemäß Fig. 2 und eine Ansicht des Anschlußflansches.

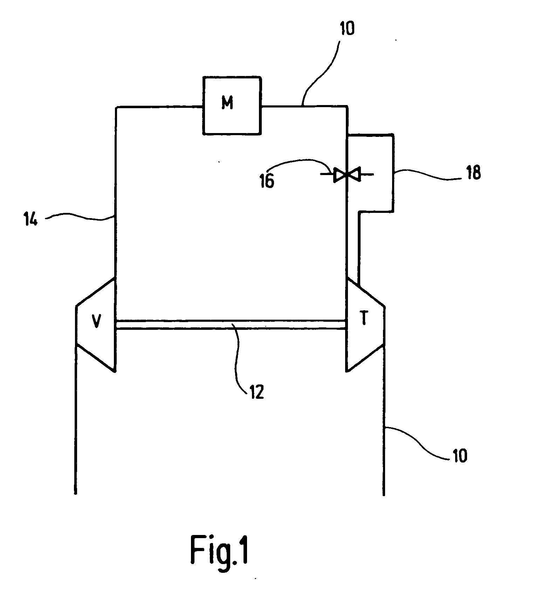

Die in Fig. 1 schematisch dargestellte Anordnung umfasst einen Motor M und einen Turbolader mit einem Turbinenrad T und einem Verdichterrad V. Das Turbinenrad T wird vom Motor M über eine Abgasleitung 10 mit Verbrennungsabgasen oder - beim Einsatz der Motorbremse - unverbrannter Luft beaufschlagt und dadurch rotatorisch angetrieben. Das Verdichterrad V sitzt auf einer gemeinsamen Welle 12 mit dem Turbinenrad T und rotiert mit diesem, wodurch verdichtete Frischluft über eine Leitung 14 in den Einlassbereich des Motors M gepumpt wird. In der Abgasleitung 10 ist zwischen dem Motor M und dem Turbinenrad T eine Bremsklappe 16 angeordnet, die wahlweise in eine Öffnungs- oder Schließstellung geschwenkt werden kann. In ihrer Öffnungsstellung gibt die Bremsklappe 16 den vollen Querschnitt der Abgasleitung 10 frei, während sie ihn in ihrer Schließstellung blockiert. Bei ganz oder teilweise geschlossener Bremsklappe wird eine um die Bremsklappe herum führende, als kalibrierter Kanal ausgebildete Bypassleitung 18 von dem Abgasstrom beaufschlagt und leitet diesen auf das Turbinenrad T. Der Querschnitt der Bypassleitung 18 ist wesentlich geringer als der Querschnitt der Abgasleitung 10, so dass bei teilweise geschlossener Bremsklappe 16 ein verhältnismäßig geringer Anteil des Abgasstroms durch die Bypassleitung 18 geleitet wird. Bei geschlossener Bremsklappe 16 stellt die Bypassleitung 18 jedoch den einzigen Strömungspfad zum Turbinenrad T dar. Auf Grund des geringen Querschnitts der Bypassleitung 18 besteht ein hoher Gegendruck, so dass nur ein entsprechend geringer Anteil des Abgasstroms zum Turbinenrad T gelangt, jedoch mit hoher Strömungsgeschwindigkeit und somit hohem Impuls. Hierdurch wird ein Abfall der Drehzahl des Turbinenrads T und des Verdichterrads V verhindert, so dass der Motor M trotz des beim Einsatz der Motorbremse relativ geringem Drehzahlniveaus einlassseitig weiterhin mit verdichteter Frischluft beaufschlagt und die Wirksamkeit der Motorbremse gesteigert wird.

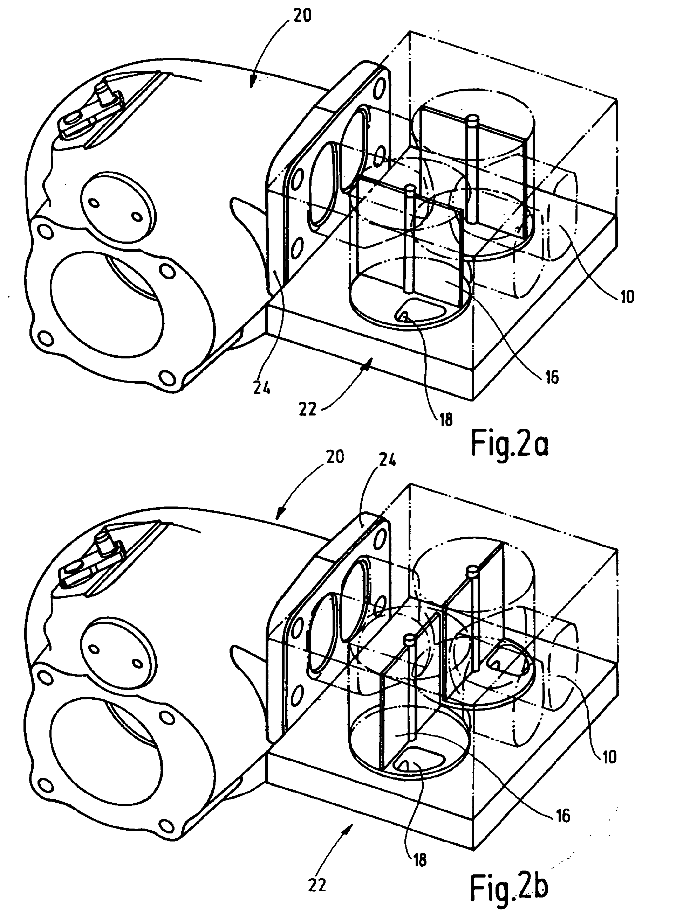

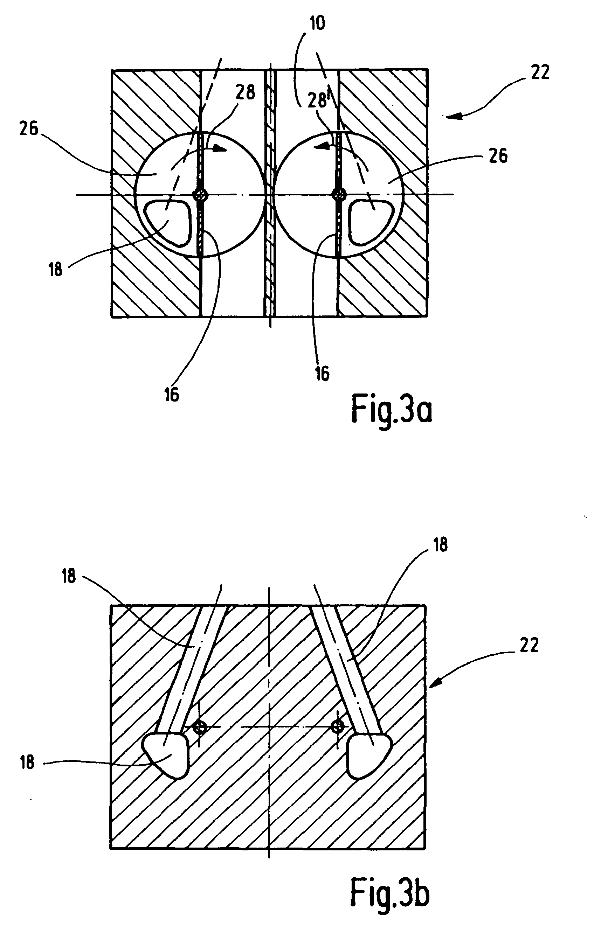

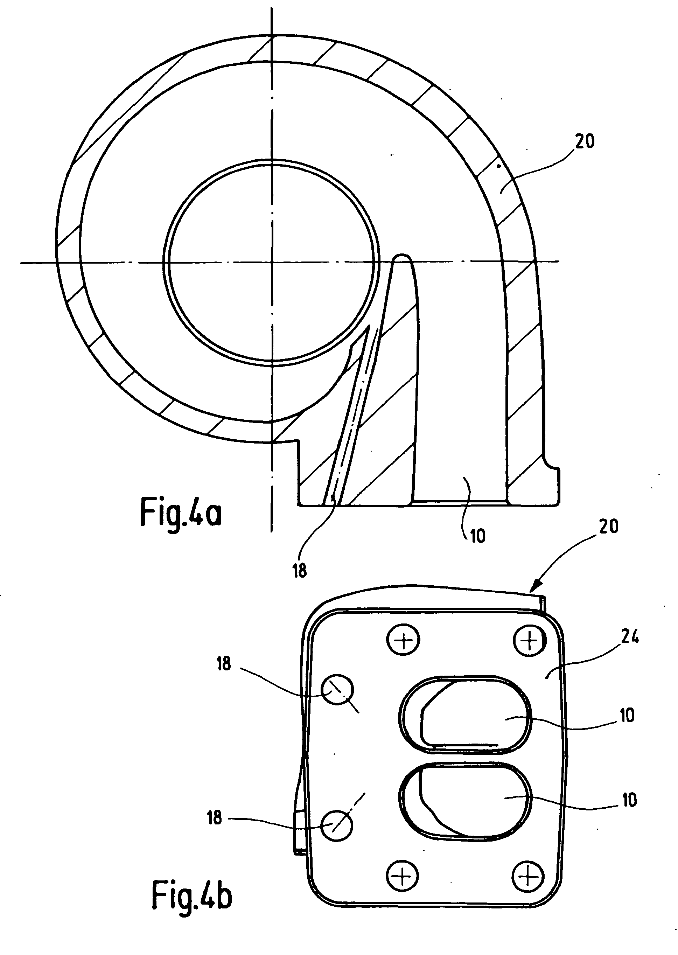

Fig. 2 zeigt eine perspektivische Ansicht eines Turbinenradgehäuses 20 eines im Übrigen nicht näher dargestellten Turboladers und eines Bremsklappengehäuses 22 mit darin angeordneten Bremsklappen16 und Bypassleitungen 18. In Fig. 2a sind die Bremsklappen 16 geöffnet und in Fig. 2b geschlossen. Umgekehrt ist die Bypassleitung 18 in Fig. 2a vom Abgasstrom getrennt und in Fig. 2b freigegeben. Die Bypassleitung verläuft im Inneren des Gehäuses 22 (vgl. Fig. 3) und im Turbinenradgehäuse 20 sind korrespondierende Kanäle ausgebildet (vgl. Fig. 4), die den Abgasstrom auf das Turbinenrad leiten. Das Bremsklappengehäuse 22 ist eintrittsseitig mit einem nicht näher dargestellten Abgaskrümmer des Auspuffsystems und austrittsseitig mit einem Flansch 24 des Turbinenradgehäuses 20 verbunden, jedoch kann es auch einstückig entweder mit dem Turbinenradgehäuse 20 oder dem Abgaskrümmer ausgebildet sein. Die Betätigung der Bremsklappen 16 erfolgt auf nicht näher dargestellte Weise synchron über ein Betätigungsgestänge, das beispielsweise nach Maßgabe einer elektronischen Steuereinheit mittels einer pneumatischen Einrichtung (Steuerdose) aktuiert wird.

In Fig. 2 ist eine zweiflutige Ausbildung des Bremsklappengehäuses 22 mit zwei Bremsklappen 16 und zwei Bypassleitungen 18 dargestellt und entsprechend weist auch das Turbinenradgehäuse 20 zwei Strömungskanäle auf. Die Verwirklichung der Erfindung ist jedoch ebenso mit einer einflutigen Ausbildung der Gehäuse möglich, wobei dann selbstverständlich jeweils nur eine Bremsklappe und eine Bypassleitung vorgesehen sind. Weiterhin ist es alternativ möglich, die getrennt geführten Abgasströme am Ausgang des Bremsklappengehäuses 22 zusammenzuführen und in ein einflutiges Turbinenradgehäuse zu leiten.

Fig. 3 zeigt einen Längsschnitt durch das Bremsklappengehäuse in der Ebene der Abgasleitung 10 (Fig. 3a) und in der Ebene der Bypassleitung 18. Die Bremsklappen 16 sind in ihrer Öffnungsstellung parallel zum seitlichen Rand der Abgasleitung 10 angeordnet und es ist jeweils ein halbzylindrischer Schwenkraum 26 für eine Flügelhälfte der Bremsklappen 16 in deren Schließstellung vorgesehen, wobei die Bypassleitung 18 eingangsseitig in den Boden des Schwenkraums 26 mündet. Die Schwenkrichtung der Bremsklappen 16 ist in Fig. 3a durch die Pfeile 28, 28' gekennzeichnet. Durch diese Schwenkrichtung ist sichergestellt, dass die Bremsklappen 16 bei einem möglichen Defekt im Bereich der Klappenbetätigung durch den Abgasdruck in ihre Öffnungsstellung gedrängt werden und keine ungewollt dauerhafte Motorbremswirkung eintreten kann.

Fig. 4 zeigt einen Querschnitt durch das Turbinenradgehäuse 20 und eine Ansicht des Flansches 24. Das Gehäuse 20 weist eine Zunge 30 auf, die den Abgasstrom auf das nicht näher dargestellte Turbinenrad herkömmlicher Ausbildung leitet. Die Zunge 30 wird von der Bypassleitung 18 durchsetzt, so dass der Abgasstrom durch die Bypassleitung 18 in unmittelbarer Nähe zum Turbinenrad austritt. Hierdurch wird die Impulsübertragung auf das Turbinenrad verbessert und somit der Wirkungsgrad des Antriebs des Turbinenrads über die Bypassleitung 18 gesteigert. Fig. 4b zeigt den Eintritt der Bypassleitungen 18 und der Abgasleitungen 10 in das Turbinenradgehäuse 20 über den Flansch 24.

Zusammenfassend ist folgendes festzuhalten: Die Erfindung betrifft eine Anordnung zur Steuerung des Abgasstroms eines vorzugsweise nach dem Dieselprinzip arbeitenden Motors M, mit mindestens einem von dem Abgasstrom beaufschlagten Turbolader mit einem Turbinenrad T und einem Verdichterrad V, die auf einer gemeinsamen Welle 12 angeordnet sind, mit einem Abgaskrümmer, der den Abgasstrom von Auslassventilen des Motors M zum Turbolader leitet, und mit einer zwischen den Auslassventilen und dem Turbolader angeordneten Einrichtung 16 zur wahlweisen Drosselung des Abgasstroms. Um den Turbolader zur verbesserten Nutzung einer Motorbremse einsetzen zu können, ist gemäß der Erfindung mindestens eine zwischen den Auslassventilen und dem Turbolader angeordnete Bypassleitung 18 vorgesehen, die zumindest einen Teil des Abgasstroms an der Drosseleinrichtung 16 vorbeiführt und diesen auf das Turbinenrad T des Turboladers leitet.

## Patentansprüche

1. Anordnung zur Steuerung des Abgasstroms eines vorzugsweise nach dem Dieselprinzip arbeitenden Motors (M), mit mindestens einem von dem Abgasstrom beaufschlagten Turbolader mit einem Turbinenrad (T) und einem Verdichterrad (V), die auf einer gemeinsamen Welle (12) angeordnet sind, mit einem Abgaskrümmer, der den Abgasstrom von Auslassventilen des Motors zum Turbolader leitet, mit einer zwischen den Auslassventilen und dem Turbolader angeordneten, als in den Abgasstrom schwenkbare Bremsklappe ausgebildeten Einrichtung (16) zur wahlweisen Drosselung des Abgasstroms, und mit mindestens einer zwischen den Auslassventilen und dem Turbolader angeordneten Bypassleitung (18), die zumindest einen Teil des Abgasstroms an der Drosseleinrichtung (16) vorbeiführt und diesen auf das Turbinenrad (T) des Turboladers leitet, wobei die einrichtung (16) zur Drosselung des Abgasstroms und die mindestens eine Bypassleitung (18) in einem gemeinsamen Gehäuse (22) angeordnet sind und wobei in dem Gehäuse zwei separate Strömungspfade (10) mit jeweils einer Bremsklappe (16) und einer Bypassleitung (18) ausgebildet sind, **dadurch gekennzeichnet dass** die Bypassleitungen (18) im Wesentlichen geradlinig im Gehäuse (22) und im Turbinengehäuse (20) verlaufen und den Abgasstrom im Wesentlichen tangential auf das Turbinenrad (T) leiten, und die mindestens eine Bypassleitung (18) in einer Öffnungsstellung der Bremsklappe (16), in der der gesamte Abgasstrom dem Turbolader zugeführt wird, verschlossen ist und in einer Schließstellung der Bremsklappe (16) freigegeben ist.

2. Anordnung nach Anspruch 1, **dadurch gekennzeichnet, dass** die mindestens eine Bypassleitung (18) als kalibrierter Kanal ausgebildet ist, dessen Querschnitt derart bemessen ist, dass ein vorbestimmt begrenzter Abgasstrom auf das Turbinenrad (T) geleitet wird.

3. Anordnung nach einem der Ansprüche 1 bis 2, **dadurch gekennzeichnet, dass** das Gehäuse (22) der Drosseleinrichtung (16) einstückig mit einem Gehäuse (20) des Turboladers ausgebildet ist.

4. Anordnung nach einem der Ansprüche 1 bis 2, **dadurch gekennzeichnet, dass** das Gehäuse (22) der Drosseleinrichtung (16) einstückig mit dem Abgaskrümmer des Motors (M) ausgebildet ist.

5. Anordnung nach einem der Ansprüche 1 bis 4, **dadurch gekennzeichnet, dass** die Drosseleinrichtung (16) für den Abgasstrom ein pneumatisches, hydraulisches oder elektrisches Betätigungsorgan aufweist.

6. Anordnung nach einem der Ansprüche 1 bis 5, **gekennzeichnet durch** eine elektronische Steuereinheit für die Steuerung der Betätigung der Drosseleinrichtung (16).

## Claims

1. Arrangement for controlling the exhaust-gas flow of an engine (M) operating preferably according to the diesel principle, having at least one turbocharger which is impinged on by the exhaust-gas flow and which has a turbine wheel (T) and a compressor wheel (V) arranged on a common shaft (12), having an exhaust manifold which conducts the exhaust-gas flow from outlet valves of the engine to the turbocharger, having a device (16) which is arranged between the outlet valves and the turbocharger and which is in the form of a brake flap which can be pivoted into the exhaust-gas flow and which serves for the selective throttling of the exhaust-gas flow, and having at least one bypass line (18) which is arranged between the outlet valves and the turbocharger and which conducts at least a part of the exhaust-gas flow past the throttle device (16) and conducts said part of the exhaust-gas flow to the turbine wheel (T) of the turbocharger, wherein the device (16) for throttling the exhaust-gas flow and the at least one bypass line (18) are arranged in a common housing (22), and wherein in the housing there are formed two separate flow paths (10) with in each case one brake flap (16) and one bypass line (18), **characterized in that** the bypass lines (18) run substantially rectilinearly in the housing (22) and in the turbine housing (20) and conduct the exhaust-gas flow substantially tangentially to the turbine wheel (T), and the at least one bypass line (18) is closed when the brake flap (16) is in an open position in which the entire exhaust-gas flow is supplied to the turbocharger, and said at least one bypass line is opened up when the brake flap (16) is in a closed position.

2. Arrangement according to Claim 1, **characterized in that** the at least one bypass line (18) is in the form of a calibrated duct, the cross section of which is dimensioned such that an exhaust-gas flow which is restricted to a predetermined extent is conducted to the turbine wheel (T).

3. Arrangement according to one of Claims 1 to 2, **characterized in that** the housing (22) of the throttle device (16) is formed in one piece with a housing (20) of the turbocharger.

4. Arrangement according to one of Claims 1 to 2, **characterized in that** the housing (22) of the throttle device (16) is formed in one piece with the exhaust manifold of the engine (M).

5. Arrangement according to one of Claims 1 to 4, **characterized in that** the throttle device (16) for the exhaust-gas flow has a pneumatic, hydraulic or electric actuating element.

6. Arrangement according to one of Claims 1 to 5, **characterized by** an electronic control unit for controlling the actuation of the throttle device (16).

## Revendications

1. Agencement de commande du flux de gaz d'échappement d'un moteur (M) fonctionnant de préférence selon le principe diesel, comprenant au moins un turbocompresseur sollicité par le flux de gaz d'échappement avec une roue de turbine (T) et une roue de compresseur (V), qui sont disposées sur un arbre commun (12), un collecteur de gaz d'échappement qui guide le flux de gaz d'échappement depuis des soupapes d'échappement du moteur vers le turbocompresseur, un dispositif (16) disposé entre les soupapes d'échappement et le turbocompresseur, réalisé sous forme de clapet de freinage pouvant pivoter dans le flux de gaz d'échappement, pour l'étranglement sélectif du flux de gaz d'échappement, et au moins une conduite de dérivation (18) disposée entre les soupapes d'échappement et le turbocompresseur, qui guide au moins une partie du flux de gaz d'échappement devant le dispositif d'étranglement (16) et le conduit vers la roue de turbine (T) du turbocompresseur, le dispositif (16) pour l'étranglement du flux de gaz d'échappement et l'au moins une conduite de dérivation (18) étant disposés dans un boîtier commun (22) et deux chemins d'écoulement séparés (10) étant réalisés dans le boîtier avec à chaque fois un clapet de freinage (16) et une conduite de dérivation (18), **caractérisé en ce que** les conduites de dérivation (18) s'étendent essentiellement en ligne droite dans le boîtier (22) et dans le boîtier de turbine (20) et conduisent le flux de gaz d'échappement essentiellement tangentiellement vers la roue de turbine (T), et l'au moins une conduite de dérivation (18) est fermée dans une position d'ouverture du clapet de freinage (16), dans laquelle l'ensemble du flux de gaz d'échappement est acheminé au turbocompresseur, et est libérée dans une position de fermeture du clapet de freinage (16).

2. Agencement selon la revendication 1, **caractérisé en ce que** l'au moins une conduite de dérivation (18) est réalisée sous forme de canal calibré, dont la section transversale est dimensionnée de telle sorte qu'un flux de gaz d'échappement limité de manière prédéterminée soit conduit vers la roue de turbine (T).

3. Agencement selon l'une quelconque des revendications 1 à 2, **caractérisé en ce que** le boîtier (22) du dispositif d'étranglement (16) est réalisé d'une seule pièce avec un boîtier (20) du turbocompresseur.

4. Agencement selon l'une quelconque des revendications 1 à 2, **caractérisé en ce que** le boîtier (22) du dispositif d'étranglement (16) est réalisé d'une seule pièce avec le collecteur de gaz d'échappement du moteur (M).

5. Agencement selon l'une quelconque des revendications 1 à 4, **caractérisé en ce que** le dispositif d'étranglement (16) pour le flux de gaz d'échappement présente un organe d'actionnement pneumatique, hydraulique ou électrique.

6. Agencement selon l'une quelconque des revendications 1 à 5, **caractérisé par** une unité de commande électronique pour la commande de l'actionnement du dispositif d'étranglement (16).
